# EUROPÄISCHE PATENTSCHRIFT

(11) **EP 1 251 985 B1**
(45) Veröffentlichungstag und Bekanntmachung des Hinweises auf die Patenterteilung: **25.05.2005**
(21) Anmeldenummer: 01911397.6
(22) Anmeldetag: 24.01.2001
(51) Int. Cl.: B22F 1/00

(54) **HOHLKUGEL UND VERFAHREN ZUR HERSTELLUNG VON HOHLKUGELN UND LEICHTBAUTEILEN MIT HOHLKUGELN**
HOLLOW BALLS AND A METHOD FOR PRODUCING HOLLOW BALLS AND FOR PRODUCING LIGHTWEIGHT STRUCTURAL COMPONENTS BY MEANS OF HOLLOW BALLS
SPHERE CREUSE, ET PROCEDE DE PRODUCTION DE SPHERES CREUSES ET DE COMPOSANTS LEGERS CONSTITUES DE SPHERES CREUSES

(30) Priorität: 25.01.2000 DE 10003175; 10.03.2000 DE 10011856; 10.03.2000 DE 10011764; 07.09.2000 DE 10046174
(43) Veröffentlichungstag der Anmeldung: 30.10.2002
(73) Patentinhaber: Glatt Systemtechnik Dresden GmbH, 01277 Dresden (DE); Fraunhofer-Gesellschaft zur Förderung der angewandten Forschung e.V., 80686 München (DE)
(72) Erfinder: BRETSCHNEIDER, Frank, 01465 Liegau-Augustusbad (DE); STEPHAN, Herbert, 01279 Dresden (DE); BRÜCKNER, Jürgen, 01157 Dresden (DE); STEPHANI, Günter, 01454 Grosserkmannsdorf (DE); SCHNEIDER, Lothar, 01640 Coswig (DE); WAAG, Ulf, 01187 Dresden (DE); ANDERSEN, Olaf, 01097 Dresden (DE); HUNKEMÖLLER, Paul, 48653 Coesfelg (DE)
(74) Vertreter: Pfenning, Meinig & Partner GbR
(86) Internationale Anmeldenummer: PCT/DE2001/000349
(87) Internationale Veröffentlichungsnummer: WO 2001/054846

(56) Entgegenhaltungen:
- EP-A- 0 271 944
- DE-A- 2 737 248
- US-A- 3 773 475
- US-A- 4 925 740
- DATABASE WPI Section Ch, Week 198940 Derwent Publications Ltd., London, GB; Class A81, AN 1989-290860 XP002172246 & JP 01 215432 A (SUMITOMO DUREZ CO), 29. August 1989 (1989-08-29)

## Beschreibung

Die Erfindung betrifft ein Verfahren zur Herstellung von Leichtbauteilen mit Hohlkugeln mit Schalen aus einem gesinterten anorganischen Material, wie Metallen, Metalloxiden oder Keramik.

In EP 0 300 543 A1 und US 4,917,857 ist ein Verfahren zur Herstellung von metallischen und keramischen Hohlkugeln beschrieben. Dabei wird auf einen kugelförmigen Kern aus einem geschäumten Polymer eine wäßrige Suspension eines metallischen oder keramischen Pulvers mit einem organischen Bindemittel aufgebracht und bei einer Temperaturbehandlung (400 bis 500 °C) das den Kern bildende Polymer pyrolisiert, wobei die gasförmigen Komponenten entweichen und ein sogenannter Grünkörper mit ausreichender Stabilität erhalten wird.

Dieser Grünkörper wird nachfolgend weiter erwärmt, um auch die bis dahin verbliebenen organischen Bestandteile des Bindemittels auszutreiben und die Pulverteilchen miteinander zu einer geschlossenen Kugelschale zu versintern.

Desweiteren ist in DE 197 50 042 C2 insbesondere das Aufbringen des pulverförmigen Ausgangsmaterials mit einem flüssigen Bindemittel auf einen Kern durch Umwälzen mit einem Rotor beschrieben.

Die so erhaltenen Hohlkugeln mit einer Schale, die im wesentlichen aus dem Pulvermaterial bestehen können für verschiedene Anwendungen eingesetzt werden.

Eine Applikation ist in DE 198 17 959 C1 für Leichtbauelemente beschrieben. Dabei sollen solche an sich bekannten Hohlkugeln mit einem polymeren Kleber zu einem "Kugelbrei" vermischt und dieser "Kugelbrei" vor dem Aushärten des Klebers in eine Form bzw. zwischen zwei Oberflächenplatten eingebracht werden. Hierfür steht bis zum Aushärten des Klebers ein bestimmtes begrenztes Zeitfenster zur Verfügung, in dem die entsprechend vorbereiteten Kugeln verarbeitet werden müssen.

Außerdem treten bei der Befüllung von Formkörpern mit diffizielen Geometrien, beispielsweise solche, die Hinterschneidungen aufweisen, Probleme beim vollständigen Befüllen des gesamten Formkörpervolumens mit einem solchen "Kugelbrei" auf.

Nach dem Aushärten des Klebers (Polyurethan- oder Polyesterbasis, ein Epoxidkleber oder PMMA) bildet der Kleber einen festen Verbund für die ein solches Leichtbauelement bildenden Hohlkugeln, was zum einen wegen der möglichen Entmischung nicht immer vollständig gelingt und zum anderen für einige Anwendungen auch nicht erwünscht ist.

Werden aber erst die Hohlkugeln in einen Formkörper eingebracht und im Nachgang dazu der mehr oder weniger viskose Kleber, kann eine homogene Kleberverteilung im Formkörper nicht erreicht werden.

Es ist daher Aufgabe der Erfindung Leichtbauelemente aus Hohlkugeln mit Schalen aus gesintertem anorganischen Material dahingehend zu verbessern, dass ihr Anwendungsbereich erweitert, die Verarbeitung zu Bauelementen technologisch vereinfacht und die Eigenschaften der hergestellten Bauelemente anwendungsspezifisch verbessert sind.

Erfindungsgemäß wird diese Aufgabe mit einem Verfahren, das, die die Merkmale des Anspruchs 1 aufweiset gelöst. Vorteilhafte Weiterbildungen der Erfindung können mit den in den untergeordneten Ansprüchen genannten Merkmalen erreicht werden.

Die erfindungsgemäß zu verwendenden Hohlkugeln bauen auf herkömmlichen Lösungen auf, weisen aber mindestens eine zusätzliche auf der sphärischen Schale, die aus einem gesinterten, zumindest überwiegend anorganischen Material besteht, Funktionsschicht auf. Das Funktionsschichtmaterial, darin enthaltene oder auf eine Funktionsschicht aufgebrachte Komponenten können mittels einer physikalischen und/oder chemischen Behandlung fließfähig, plastisch und/oder elastisch verformt werden. Dadurch können die Schalen und demzufolge auch benachbarte Hohlkugeln adhäsiv und/oder formschlüssig miteinander fixiert werden.

Die Schalen können aus Metall, einer Metalllegierung, einem Metalloxid oder einer Keramik bestehen. Sie können weitestgehend frei von organischen Bestandteilen sein. Geeignete Metalle sind beispielsweise Eisen, Nickel, Kupfer sowie Leichtmetall, z.B.

Des weiteren betrifft EP 0271 944 A1 ein Verfahren zur Herstellung von Hohlkugeln oder deren Verbinden mit Wandungen erhöhter Festigkeit

Aus US 4 925 740 sind metallischen Hohlkugeln stabilisierte Strukturen bekannt.

US 3 773 475 offenbart Strukturelemente mit unter erhöhtem Druck stehenden bzw. verformten Sphären.

In WO 99/54655 ist eine thermische Isolation zum Einbringen zwischen zu isolierende Gebilde beschrieben. Titan, Aluminium oder hochschmelzende Schwermetalle, wie beispielsweise Wolfram oder Molybdän und deren Legierungen.

Die physikalische und/oder chemische Behandlung und die Materialauswahl sollten so erfolgen, dass zumindest die Schalen der Hohlkugeln während der Behandlung nicht instabil werden.

Es können auch mehrere Funktionsschichten zwiebelschalenartig übereinander ausgebildet werden, wobei die jeweilige Materialauswahl verschiedene Anwendungen abdecken kann. Dabei kann die Behandlung solcher Hohlkugeln auch in mehreren Schritten für die jeweilige Anwendung spezifiziert durchgeführt werden.

Erfindungsgemäß zur verwendende Hohlkugel mit einer zusätzlichen festen Funktionsschicht, die zusätzlich, z.B. durch Auftrag einer Suspension auf die Schale, aufgebracht und getrocknet bzw. ausgehärtet worden ist, stellen ein besser und leichter verarbeitbares Vorprodukt als die herkömmlichen Hohlkugeln dar und diese Hohlkugeln ersparen dem Finalproduzenten von Bauelementen technologische Verfahrensschritte.

Es können Hohlkugeln ohne Funktionsschicht mit einem Außendurchmesser von 0,1 bis 20 mm, bevorzugt 0,5 bis 5 mm eingesetzt werden. Dabei kann die Schale eine Dicke aufweisen, die 0,1 bis 50 %, bevorzugt bis 10 % des Außenduchmessers der Hohlkugeln entspricht.

Die Funktionsschicht(en) sollten eine Dicke aufweisen, die nach der physikalischen bzw. chemischen Behandlung der Hohlkugeln die jeweilige funktionelle Wirkung, beispielsweise einen Korrosionsschutz oder eine Adhäsionsverbindung benachbarter Hohlkugeln gewährleistet. Die Dicke ist vorteilhaft jedoch mindestens so groß zu wählen, dass bei der plastischen und/oder elastischen Verformung eine formschlüssige Fixierung benachbarter Hohlkugeln erreicht werden kann.

Es reicht in der Regel aus, dass die Dicke einer Funktionsschicht kleiner als die Dicke der Schale ist. Die Dicke einer Funktionsschicht sollte nicht größer als die 0,9-fache, bevorzugt die 01-fache bis 0,5-fache Dicke der Schale der jeweiligen Hohlkugel sein. Dadurch können Funktionen, wie z.B. Verbindungen benachbarter Hohlkugeln zu einem Leichtbauteil, Korrosionsschutz der Metallschalen, elektrische und magnetische Eigenschaften erreicht werden.

Außerdem sollte die Masse zumindest einer Funktions-schicht bzw. mehrere die Masse der Schale nicht überschreiten.

Für eine formschlüssige Fixierung benachbarter Hohlkugeln mittels des Funktionsschichtmaterials kann es ausreichend sein, dass maximal 80 % der Oberfläche der Schale bedeckt sind.

Dadurch kann die Masse eines aus Hohlkugeln hergestellten Leichtbauelementes reduziert werden.

Die Hohlkugeln sollen rieselfähig und nicht aneinander klebend sein, so dass sie nach Lagerung und Transport problemlos verarbeitet werden können.

Auf der Funktionsschicht kann eine zusätzliche Siegelschicht, insbesondere zum temporären Schutz während des Transports und der Lagerung, aufgebracht werden, um sehr glatte, nichtklebende Oberflächen zu bilden. Hierfür können z.B. schnelltrocknende, bevorzugt wasserlösliche Lacke oder andere mehr oder weniger viskose Flüssigkeiten aufgesprüht werden. Geeignete Beispiele sind Cellulose- oder Pektinlösungen bzw. Polyvinylalkohol.

Die Funktionsschichten können aus einem homogenen Material, aber auch aus Kompositen gebildet werden.

So können in die Funktionsschicht für bestimmte Anwendungen (z.B. zu Detektionszwecken) ferro- und/oder permanentmagnetische Partikel eingebettet sein.

Die Funktionsschicht kann aber auch mit katalytisch wirkenden Elementen oder Verbindungen dotiert oder gebildet sein. So können beispielsweise Platin und/oder Rhodium galvanisch, stromlos auf einer Schale oder einer Funktionsschicht abgeschieden werden.

Werden organische Materialien oder Komponenten für die Funktionsschichten eingesetzt, sind solche Polymere besonders geeignet, die ausgewählt sind aus Ethylenvinylacetat Copolymeren (EVA), Polyamiden oder Polyester, aber auch Phenolharz, Kresolharz, Furanharz oder Epoxidharz bzw. Bindemittel auf Latex- oder Kautschukbasis. Ein geeignetes Epoxidharz ist beispielsweise unter der Handelsbezeichnung Terokal 5051 LV bekannt und ein Material auf Kautschukbasis kann unter der Handelsbezeichnung Terostat 5190 kommerziell erworben werden. Beide Produkte können bei Temperaturen oberhalb 55 °C aufgetragen und nachfolgend durch Energieeintrag ausgehärtet werden. Sie sind dann hochfest und hochsteif. Das Material auf Kautschukbasis kann auch teilausgehärtet werden. Beide genannten Produkte weisen eine elektrische Leitfähigkeit von ca. 10⁶ Ωcm auf.

Besonders geeignet sind die sogenannten "hot melts", die häufig Ethylenvinylacetat Copolymere sind.

Die Zusammensetzung dieser Materialien kann so eingestellt werden, dass ein Auftrag bei relativ niedrigen Temperaturen (z.B. < 60 °C) in flüssiger Phase und nach Trocknung später eine Aktivierung beispielsweise mittels Erwärmung erfolgen kann. Dabei kann bei bestimmter Auswahl bzw. Zusammensetzung ganz gezielt eine bestimmte Erweichungs- bzw. Schmelztemperatur eingestellt werden, die bevorzugt oberhalb 80 °C, ganz bevorzugt oberhalb 100 °C liegen sollte.

Es können aber auch an sich bekannte Pulverlacke, z.B. auf Phenol- oder Epoxidharzbasis als Funktionsschichtmaterial eingesetzt werden. Diese können pulverförmig auf die erhitzten Hohlkugeln, beispielsweise im Wirbelbett aufgebracht werden, wobei Temperaturen eingehalten werden sollten, bei denen das Pulver an den Schalen der Hohlkugeln haftet, jedoch kein zum Verlaufen führendes Schmelzen des Pulverlackpulvers auftritt. Dabei können die einzelnen Pulverpartikel mehr oder weniger gleichmäßig auf der Schalenoberfläche verteilt haften und nach Abkühlung die Hohlkugeln ohne weiteres transportiert und gelagert werden, ohne dass sie miteinander verkleben. Erst bei der Herstellung von Leichtbauelementen wird die Temperatur wieder erhöht, bis das Pulver erweicht oder schmilzt. Beim Schmelzen kann ein gleichmäßiger Lacküberzug über die gesamte Oberfläche ausgebildet werden, wobei jedoch bei entsprechend dichter Packung der Hohlkugeln bzw. einer Druckausübung (Verdichtung) auf die Hohlkugeln Oberflächenbereiche von sich unmittelbar berührenden Hohlkugeln Funktionsschichtmaterial frei (z.B. lackfrei) gehalten werden können.

Eine Funktionsschicht kann beispielsweise aus einem organischen Bindemittel gebildet sein, in und/oder auf der Partikel, bevorzugt Metalle oder Polymere adhäsiv gehalten sind. Diese Partikel können sich bei einer thermischen Endverarbeitung verformen.

Polymere können auch pulverförmige anorganische Elemente und Verbindungen enthalten und dann insbesondere Bindemittelfunktion für diese Elemente bzw. Verbindungen, neben anderen Funktionen, wie Korrosionsschutz und/oder Isolierung, erfüllen.

Geeignete anorganische Elemente oder Verbindungen sind z.B. Metalle, Farbpigmente, Metallverbindungen, Metalllegierungen bzw. solche mit magnetischen oder ferromagnetischen Eigenschaften.

Werden pulverförmige Elemente oder Verbindungen für die Funktionsschichten eingesetzt, können diese auf die Schalen als Suspension mit einem Bindemittel aufgebracht werden. Neben organischen Bindemitteln können auch anorganische Bindemittel benutzt werden. So können beispielsweise Metallsalzlösungen oder Wasserglas verwendet werden, um Metall-, Metalloxid-, Keramik- oder Glaspulver zumindest temporär zu binden. Geeignete Gläser sind z.B. Emails oder Glaslote, beispielsweise Blei oder Bor enthaltende Gläser, wobei letztere eine relativ niedrige Erweichungs- und Schmelztemperatur aufweisen.

Vorteilhaft kann die Funktionsschicht ein Metall enthalten, das mit einem metallischen Schalen- oder einem zweiten Funktionsschichtmaterial ein Intermetallid bilden kann. Dies ist beispielsweise mit Zinn und Kupfer möglich. Auch verschiedene Aluminide können so gebildet werden.

Es können aber auch Metalllegierungen gebildet werden, wenn geeignete Metalle in einer Funktionsschicht bzw. in Funktionsschicht und Schale enthalten sind.

Insbesondere bei porösen Schalen kann es vorteilhaft sein, eine Materialkombination zu wählen, die eine Infiltration ermöglicht. Dabei kann das Funktionsschichtmaterial in die poröse Schale oder Schalenmaterial in die Funktionsschicht infiltriert werden, um eine geschlossene Hülle zu erhalten. Dadurch kann der Außendurchmesser der Hohlkugel beeinflusst werden.

Außerdem können poröse schwer sinterbare Keramiken oder Metalle mit einer dichten Oberfläche ausgestattet werden.

Es können auch verschiedene Additive in der Funktionsschicht enthalten sein. Beispiele sind Lote, Flußmittel, Sinterhilfsmittel, Treib- oder auch Quellmittel.

So können die Funktionsschicht mit einem pulverförmigen Metall, in dem zusätzlich ein Treibmittel enthalten ist, gebildet wird. Bei einer Erwärmung wird mittels der Funktionsschicht Metallschaum gebildet, der Hohlräume in einer Schüttung von Hohlkugeln zumindest teilweise ausfüllen kann.

Es können die verschiedensten Metallpulver reiner Metalle (z.B. Si, Al oder Cu), aber auch Legierungen, beispielsweise mit Mn eingesetzt werden.

Geeignete Treibmittel sind Metallhydride, Carbonate oder Hydrate. Bevorzugt kann pulverförmiges Titanhydrid eingesetzt werden.

Die Konzentration des Treibmittels in der Funktionsschicht sollte innerhalb der Funktionsschicht in der Innenwand größer, als außen sein, um die Schaumbildung vorteilhaft zu beeinflussen.

Insbesondere bei mehreren übereinander ausgebildeten unterschiedlichen Funktionsschichten kann eine Kombination von physikalischer und chemischer Behandlung sinnvoll sein. So kann beispielsweise eine Entfernung oder Aktivierung auf chemischen Wege erfolgen und nachfolgend durch Wärmebehandlung eine plastische Verformung durchgeführt werden.

Hohlkugeln mit einer im Wesentlichen aus Metall gebildeten Schale können gegenüber bekannten Lösungen vorteilhaft dadurch hergestellt. werden, dass ein bei Erwärmung flüchtiger Trägerstoff, beispielsweise Styropor mit einer Hüllschicht versehen wird. Diese Hüllschicht wird aus einer Flüssigkeit, die einen Binder und Basismetallpulverteile enthält, gebildet, wobei nach einem Trocknen eine Sinterung durchgeführt wird. Bei herkömmlichen Verfahren treten Probleme dadurch auf, dass so vorbereitete kugelförmige Vorprodukte während des Sinterns keine ausreichende Festigkeit aufweisen, da mit steigenden Temperaturen die Binderwirkung in der Regel stark nachlässt. Das verwendete Bindemittel wird durch Verdampfen bzw. Pyrolyse ausgetrieben, so dass die Festigkeit verringert ist. Die ausgebildeten angesinterten Wanddicken können bereits bei geringen Drücken und Kräften beschädigt und eingedrückt werden, so dass einzelne so vorbereitete Hohlkugeln zerstört werden. Es ist aufwendig solche beschädigten bzw. zerstörten Hohlkugeln auszusondern. Diesem Nachteil kann dadurch entgegengetreten werden, dass der den Binder und Basismetallpulver enthaltenden Mischung ein sich durch Erwärmung zersetzender Zusatzstoff zugegeben wird. Ein solcher Zusatzstoff kann in der Flüssigkeit der Mischung gelöst oder in kollodialer Form enthalten sein.

Die Zersetzung des Zusatzstoffes kann während des Sinterns erfolgen, wobei die gebildeten Ergänzungs-Zersetzungsprodukte des Zusatzstoffes während des zeitlichen Verlaufes der Wärmebehandlung beim Sintern zusätzliche Binderbestandteile für das Basismetallpulver in Form von Festkörpern bilden. Dieser Prozess verläuft gegenläufig zur verringerten Binderwirkung des eigentlichen Binders mit steigender Temperatur und die Bindefunktion wird sukzessive von den aus dem Zusatzstoff gebildeten Ergänzungs-Zersetzungsprodukten übernommen.

Die nach dem Sintern vorliegende Hohlkugel mit einer metallischen Schale kann dann im Nachgang mit mindestens einer Funktionsschicht versehen werden, wie sie vorab bereits in verschieden beispielhaften Formen beschrieben worden ist.

Der Zusatzstoff, der als Suspension gemeinsam mit der Flüssigkeit, dem Binder und dem Basismetallpulver vorliegt, kann vorteilhaft ein Metallsalz oder ein Metallhydroxid sein, wobei auch mehrere solcher Salze und/oder Metallhydroxide enthalten sein können. Durch die Erhöhung der Temperatur im zeitlichen Verlauf der Wärmebehandlung für das Sintern bildet sich aus einem Metallsalz ein Metalloxid aus, (wobei die Oxidbildung vorteilhaft in einer oxidierenden Atmosphäre erfolgen kann). Das in Form von Festkörpern als Ergänzungs-Zersetzungsprodukt gebildete Metalloxid eines Metallsalzes wirkt dann als Bindemittel zwischen den Basismetallpulverteilen und erhöht die Festigkeit der sich ausbildenden Schale einer Hohlkugel, während sich der im Wesentlichen aus organischen Komponenten zusammengesetzte Binder durch Pyrolyse zersetzt wird.

Es kann aber auch in inerter Atmosphäre, z.B. Stickstoff oder Argon gesintert werden.

Geeignet sind z.B. Kupfer-Acetat, Nickel-Acetat, Eisen-Oxalat, Nickel-Carobante, Nickel-Acetylacetonat oder Kupfer-Acetylacetonat. Diese Verbindungen sollten bevorzugt bis zur jeweiligen Sättigungsgrenze in einer Flüssigkeit gelöst, eingesetzt werden.
Während der vor dem Sintern durchgeführten Trocknung konzentrieren sich die gelösten Zusatzstoffe in der Flüssigkeit aufgrund ihrer Oberflächenspannung an den Berührungsstellen der Basismetallpulverteile und bleiben nach dem Trocknen gemeinsam mit den organischen Binderbestandteilen, die in der Flüssigkeit enthalten waren, als Festsubstanz zurück und erhöhen aufgrund der Volumenzunahme an den Berührungsstellen der Basismetallpulverteile die Festigkeit der Schalen der Hohlkugel gegen Druck und Erschütterungen.

Die Festigkeit der Hohlkugeln wird auch dadurch erhöht, dass die beim Sinterprozess gebildeten und als Festkörper verbleibenden Ergänzungs-Zersetzungsprodukte, die aus dem Zusatzstoff erhalten worden sind, konzentriert jeweils an allen gegenseitigen Berührungsstellen der Basismetallpulverteile angesammelt werden. Diese Ansammlung erfolgt aufgrund der Oberflächenspannung der Flüssigkeit an den Berührungssellen der einzelnen Basismetallpulverteile vor der Trocknung.

Die Übernahme der Binderfunktion während der Erwärmung durch die aus dem Zusatzstoff gebildeten Zersetzungsprodukte, bei gleichzeitig gegenläufiger Verringerung der Binderfunktion des Binders für die Basismeallpulverteile, wirkt sich besonders bei dünnwandigen Hohlkugeln vorteilhaft aus.

Vorteilhaft können als Zusatzstoff Metallsalze organischer Säuren eingesetzt werden, da bei der Zersetzung eines solchen Zusatzstoffes und des Binders außerdem nur Kohlenstoff, Sauerstoff und/oder Wasserstoff frei gesetzt und in die Atmosphäre abgegeben werden und solche Stoffe in der Regel unschädlich für Mensch, Umwelt und Technik sind.

Die Metallsalze werden vorteilhaft aus leichtreduzierbaren Metallen, wie Kupfer, Eisen, Nickel, Kobalt, Zinn, Molybdän, Wolfram und/oder Silber ausgewählt und eignen sich dementsprechend bei einem Basismetallpulver auf Eisenbasis gut zum Sintern, wobei diese Metalle auch geeignete Legierungselemente sind, da sie auch bei gesinterten Stählen eingesetzt werden können.

Für die Herstellung der Suspension aus der die Hüllschicht, die später nach dem Sintern die Stützschalte einer Hohlkugel bilden kann, kann als Lösungsmittel beispielsweise Wasser, Alkohol oder ähnlichen Flüssigkeiten eingesetzt werden. Wird z.B. Alkohol als Flüssigkeit eingsetzt, eignet sich dieser Alkohol besonders vorteilhaft, da der in der Regel organische Binder in Alkohlen gut lösbar ist.

Die Ausbildung der Hüllschicht kann mittels Naßpulverspritzverfahren oder Schlickergießen auf dem kugelförmigen Träger aus Styropor oder Styrol, in vorgeschäumter Form aufgebracht werden, wobei der Trägerkörper nach dem Trocknen und Sintern durch Entgasen und Pyrolyse vollständig zersetzt und die gebildeten gasförmigen Komponenten nach außen entweichen, so dass die gebildete metallische Schale innen vollständig hohl sein kann.

Als organischer Binder kann ein aus einem oder mehreren organischen Bindemitteln bestehender eingesetzt werden, der gemeinsam mit den Basismetallpulverteilen und dem Zusatzstoff in der Flüssigkeit enthalten ist.

Bei der bereits erwähnten Ansammlung des Zusatzstoffes an den Berührungsstellen der Basismetallpulverteile befindet sich der Zusatzstoff in der Flüssigkeit im atomaren und/oder molekularen Größenbereich gelöst und/oder homogen verteilt. Beim Trocknen bildet der in der Flüssigkeit enthaltene Zusatzstoff zwischen den Berührungsstellen der Basismetallpulverteile eine Festsubstanz. Er wird während der Trocknung jedoch noch nicht zersetzt. Die Ansammlung der aus dem Zusatzstoff gebildeten Festsubstanz an den Berührungsstellen der Basismetallpulverteile bleibt nach dem Trocknen erhalten und die Bindung der Basismetallpulverteile untereinander kann dadurch verstärkt werden, so dass die Festigkeit der getrockneten Hüllschicht bereits aufgrund der aufgetretenen Volumenzunahme an den Berührungsstellen der Basismetallpulverteile erhöht werden kann. Die im Wesentlichen aus der getrockneten Hüllschicht gebildete Hohlkugel ist bereits vor dem Sintern gegenüber Stößen, Erschütterungen und Schwingungen erheblich weniger empfindlich, als dies bei bekannten Lösungen der Fall ist.

Ganz besonders vorteilhaft können Metallsalze von Metallen, deren Oxide leicht reduziert werden können, eingesetzt werden. Solche Metalle sind beispielsweise Kupfer, Eisen, Nickel, Kobalt, Zinn, Molybdän, Wolfram bzw. Silber. So können Metallsalze, die ausgewählt sind, aus Hydroxiden, Carbonaten, Acetaten, Formiaten, Oxalaten und/oder Acetylacetonate günstigerweise eingesetzt werden.

Die mit der Hüllschicht versehene, getrocknete Hohlkugel kann bei einer weitere Wärmebehandlung in oxidierender Atmosphäre bei Temperaturen von ca. 600 °C entbindert werden. Dabei zersetzen sich sämtliche organischen Binderbestandteile, und auch der beigefügte Zusatzstoff, wobei aus diesem ein als Festkörper ausgebildetes Ergänzungs-Zersetzungsprodukt, in der Regel Metalloxide und/oder Metallhydroxide gebildet werden. Dabei kann der nunmehr als Festkörper vorliegende Zusatzstoff die Rolle der organischen Bestandteile des Binders übernehmen, der durch überwiegend Pyrolyse seine molekulare Struktur der organischen Bindersubstanz verliert und die oraanischen Moleküle zum größten Teil als Gas entweichen. Häufig verbleibt aufgrund der thermodynamischen Stabilität einzelner der Pyrolyse unterworfenen organischen Produkte ein Binderrest, der zunächst weitgehend aus aromatischen Kohlenwasserstoffverbindungen besteht und damit noch eine Bindefunktion zwischen den Basismetallpulverteilen übernehmen kann. Die Verringerung der Binderwirkung kann durch die gebildeten Zersetzungsprodukte des Zusatzstoffes weitestgehend ausgeglichen werden, da beispielsweise als Zersetzungsprodukte gebildete Metalloxide, als Binder wirken können.

Beim Sintern wird mit steigender Temperatur zuerst der Binder bis auf Binderreste und anschließend der verwendete Trägerstoff flüchtig. Die Zersetzungstemperaturen des Trägerstoffes und des Zusatzstoffes liegen dabei normalerweise unterhalb der Schmelztemperatur des Zusatzstoffes und der jeweiligen Basismetallpulverteile.

Die Bindewirkung von Metalloxiden nimmt insbesondere aufgrund ihrer kleinen Partikelgröße beim Sintern mit steigender Temperatur zu, wohingegen die Bindewirkung des flüchtig werdenden Binders, bis auf wenige verbliebene Binderreste während des zeitlichen Ablaufes des Sinterns gegenläufig abnimmt.

In einer Ausgestaltung dieses Verfahrens zur Herstellung von Hohlkugeln mit metallischen Schalen können beim Sintern in einer reduzierenden Atmosphäre aus den hier mit Ergänzungs-Zersetzungsprodukten des Zusatzstoffes Legierungsbestandteile für die Basismetallpulverteile gebildet werden, die ebenfalls in fester Form als Zwischenprodukt vorliegen. Dabei sollte die Schmelztemperatur eines aus dem Zusatzstoff gebildeten Ergänzungsproduktes kleiner als die Schmelztemperatur des jeweiligen Basismetallpulvers sein.

Wie bereits erwähnt, kann nach dem Sintern auf die nunmehr ausgebildete metallische, stabile Schale mindestens eine Funktionsschicht, beispielsweise in einem Wirbelschichtreaktor aufgebracht werden.

Es besteht aber auch die Möglichkeit unmittelbar auf die metallische Schale bzw. eine zwischengeschaltete, geeignete Funktionsschicht eine Metallschicht, stromlos, galvanisch abzuscheiden, wobei hierfür insbesondere als Katalysator geeignete Metalle empfohlen werden können. In diesem Falle ist es vorteilhaft, die Oberfläche der Schale bzw. Funktionsschicht mit einer relativ großen Rauhigkeit bzw. Porosität auszubilden, um die Oberfläche entsprechend zu vergrößern.

Funktionsschichten können aber auch im Wirbelbett oder einer Vorrichtung, wie sie z.B. in DE 197 50 042 C2 beschrieben ist, aufgebracht und ausgebildet werden.

Zur Herstellung von Leichtbauelementen mit erfindungsgemäßen Hohlkugeln wird ein Formkörper oder ein die äußere Hülle des Leichtbauelementes bildendes Gebilde mit diesen Hohlkugeln, möglichst das gesamte innere Volumen ausfüllend, befüllt.

Nach dem Befüllen und ggf. einer Verdichtung der ansonsten unbehandelten Hohlkugeln erfolgt in mindestens einem weiteren Verfahrensschritt eine physikalische und/oder chemische Behandlung, bei der das Funktionsschichtmaterial zumindest soweit erweicht wird, dass es plastisch und/oder elastisch verformbar ist.

Die Verdichtung kann mit einer einfachen Druckverdichtung günstiger, jedoch mittels einer Vibrationsverdichtung, durchgeführt werden, wobei eine Verdichtung vorteilhaft auch zumindest zeitweise bei der nachfolgenden physikalischen und/oder chemischen Behandlung durchgeführt werden kann.

Die physikalische Behandlung kann eine durch einen Energieeintrag bewirkte Erwärmung des Funktionsschichtmaterials sein, wobei die Erweichungstemperatur und ggf. auch die Schmelztemperatur dieses Materials kleiner als die des die Schale bildenden Materials sein sollte.

Das erwärmte fließfähige Material paßt sich der Oberflächenform der in möglichst dichter Packung aneinander liegenden und sich gegenseitig nahezu punktförmig berührenden Hohlkugeln an. Nach dem Erkalten, bei dem das Funktionsschichtmaterial auch wieder erstarren kann, werden benachbarte Hohlkugeln zumindest formschlüssig fixiert, wobei eine feste Klebeverbindung nicht zwingend erforderlich ist.

Durch das Fließen des Funktionsschichtmaterials können zwischen den Hohlkugeln verbliebene Hohlräume zumindest teilweise mit diesem Material gefüllt werden. Dadurch können auf die Hohlkugel wirkende Kräfte beeinflusst und unerwünschte Spannungen in den Schalen vermieden werden.

Außerdem kann erreicht werden, dass zwischen den Berührungspunkten bzw. -flächen benachbarter Hohlkugeln das Funktionsschichtmaterial vollständigt verdrängt wird und die Schalen unmittelbar aneinander liegen, wodurch die Stabilität und Festigkeit des Leichtbauelementes erhöht werden kann.

Die Erwärmung kann beispielsweise durch Konvektion mit heißen Gasen oder Flüssigkeiten, die durch die Packung der Hohlkugeln geführt werden oder durch Wärmestrahlung, induktiv oder über die entsprechend erwärmte Formwand, erfolgen.

Eine chemische Behandlung kann bevorzugt mit einem für das Funktionsschichtmaterial geeigneten Lösungsmittel durchgeführt werden, das flüssig oder dampfförmig in die befüllte Form gegeben wird. Mit einem solchen Lösungsmittel wird eine Erweichung des Funktionsschichtmaterials erreicht, so dass dieses wieder temporär plastisch verformbar wird. Nach dem Abziehen bzw. Abdampfen des Lösungsmittels, was durch Absaugen und/oder eine Erwärmung erfolgen kann, kann das Funktionsschichtmaterial wieder Erstarren und die eingenommene Form beibehalten.

Bei einer Mischung mehrerer Komponenten, aus denen die Funktionsschicht gebildet worden ist, kann es genügen, eine Komponente soweit mit dem Lösungsmittel und/oder durch Energiezufuhr zu erweichen, dass die plastische Verformbarkeit gegeben ist.

Es können organische Lösungsmittel eingesetzt werden, um entsprechende Polymere oder Polymere enthaltende Funktionsschichten bzw. darin enthaltene organische Komponenten zumindest anzulösen und zu erweichen.

Besonders vorteilhaft sind Funktionsschichtmaterialien, die infolge der Behandlung ihr Volumen vergrößern, beispielsweise Aufschäumen. Dadurch können Durchmessertoleranzen der Schalen der Hohlkugeln kompensiert und ggf. auch die Eigenschaften, insbesondere Dämpfung und Elastizität des Leichtbauelementes vorteilhaft beeinflußt werden.

Solche Materialien können schäumbare Polymere, Treibmittel enthaltende Polymere, pulverförmige Treibmittel enthaltende Metalle sein.

So kann ein ggf. mit einem organischen Bindemittel gebundenes Metallpulver zusätzlich mit einem geeigneten pulverförmigen Treibmittel versetzt sein, so dass bei einer entsprechenden Erwärmung ein Metallschaum um die Schalen ausgebildet wird. Geeignete Treibmittel sind, z.B. Metallhydride, Karbonate oder Hydrate. Für Aluminium kann beispielsweise Titanhydridpulver genutzt werden.

Es können aber auch bei einer chemischen Behandlung Quellmittel zur Volumenvergrößerung des Funktionsschichtmaterials zugegeben werden.

So können quellbare Polymere als Funktionsschichtmaterial auf Schalen aufgebracht und nach dem Befüllen eines die äußere Hülle eines Leichtbauelementes bildenden Gebildes ein organisches oder anorganisches Quellmittel zugegeben werden. Im Anschluß an die durch Quellung aufgetretene Volumenvergrößerung erfolgt ein gasdichter Abschluß des Gebildes und die Hohlkugeln werden mit dem Funktionsschichtmaterial stabilisiert.

Als derartige Polymere können beispielsweise solche, die unter dem Begriff "Superabsorber" bekannt sind, eingesetzt werden. Diese Polymere können mit Wasser oder Wasserlösungen aufgequollen werden, wobei eine deutliche Volumenvergrößerung auftritt. Diese wird so lange beibehalten, wie das Wasser im Polymer gespeichert ist.

Wird beispielsweise ein solches Leichtbauelement mit einer gas- und wasserdichten Hülle benutzt, kann das aufgequollene Polymer die einzelnen Hohlkugeln ggf. unter Ausfüllen der Hohlräume fixieren.

Nach Öffnung der Hülle und Entfernung des Wassers durch Trocknung, kann bei Bedarf dieser Verbund wieder gelöst und, falls gewünscht, können die Hohlkugeln ebenfalls wieder entfernt werden.

In der Funktionsschicht kann vorteilhaft auch mindestens ein Lot und ggf. ein geeignetes Flußmittel enthalten bzw. darin eingebettet sein. Eine solche Funktionsschicht kann dabei z.B. aus reinem Zinn bzw. gebundenem Zinnpulver bestehen.

Eine Eisen- oder eine aus rostfreiem hochfesten und hitzebeständigen Edelstahl bestehende Schale kann beispielsweise mit einer die Funktionsschicht bildenden Kupferlegierung beschichtet sein.

Insbesondere bei relativ reaktionsfreudigen Schalenmaterialien, wie z.B. Eisen oder Aluminium wirken sich die Funktionsschichten als Oxidationsschutz vorteilhaft aus. Sie bilden auch bei aus Hohlkugeln hergestellten Bauteilen einen Korrosionsschutz.

Vorteilhaft kann es auch sein, wenn die Innenwand des Formkörpers mit einem Trennmittel oder die Innenwand des Formkörpers bzw. die des die äußere Hülle eines Leichtbauelementes bildenden Gebildes mit einem auch für die Funktionsschicht geeigneten Material vor der Befüllung mit Hohlkugeln beschichtet worden ist.

Dadurch können ein erleichtertes Entformen des Leichtbauelementes oder eine glattere Oberfläche eines solchen Elementes bzw. eine festere Verbindung der Hohlkugelpackung mit der äußeren Hülle gesichert werden.

Es können Metallschalen, Metall- oder andere Hohlkörper als die äußere Hülle bildende Gebilde, die mit den erfindungsgemäßen Hohlkugeln befüllbar sind, eingesetzt werden.

Wird ein Leichtbauelement in einem Formkörper hergestellt, wird die Oberfläche des entformten Leichtbauelementes im wesentlichen durch die Schalen der äußeren Hohlkugeln gebildet, wobei die Größe der Schalen der Hohlkugeln im wesentlichen die Rauhigkeit der Oberfläche bestimmt. Diese Oberfläche kann kaschiert, beschichtet oder mit Abdeckungen versehen werden.

Ein entformtes Leichtbauelement kann als Roh-Leichtbauelement einer Weiter- bzw. Endbehandlung unterzogen werden. Das gut handhabbare Roh-Leichtbauelement kann gesintert, nachgesintert oder zur Füllung der verbliebenen Hohlräume infiltriert werden.

Ein so vorbereitetes Vorprodukt kann beispielsweise als Kern in ein Formwerkzeug einer Kunststoffspritzgußmaschine eingesetzt und mit Kunststoff umspritzt werden. An Stelle des Kunststoffes kann die äußere Hülle um ein solches Vorprodukt auch aus einem Metall oder einer Metalllegierung mit einem geeigneten Verfahren ausgebildet werden. Dies kann z.B. durch Eintauchen in eine Schmelze oder Auftragschweißen oder an sich bekannte Metallspritzverfahren erreicht werden.

Ein Leichtbauelement bzw. ein Roh-Leichtbauelement kann ggf. durch Biegen oder Pressen verformt werden. Es kann aber auch zerspanend bearbeitet werden. in diesen Fällen sollte jedoch ein fester Verbund der Hohlkugeln gesichert sein, was z.B. mit Hilfe des Funktionsschichtmaterials erreicht werden kann, das der Verformung standhalten kann, ohne dass das Leichtbauelement bei der Verformung bricht.

Vorteilhaft kann für diese Fälle ein Funktionsschichtmaterial eingesetzt werden, das entweder in mehreren Stufen aushärtet oder über einen längeren Zeitraum über einen bekannten Temperaturbereich plastisch verformbar ist, so dass die Verformung des Leichtbauelementes nach der Behandlung, vor dem ggf. auftretenden vollständigen Aushärten durchgeführt werden kann.

Die Herstellung der Leichtbauelemente kann chargenweise, z.B. in Formkörpern aber auch kontinuierlich bzw. quasikontinuierlich erfolgen. Letzteres ist insbesondere für die Herstellung von Halbzeugen günstig.

Nachfolgend soll die Erfindung an einem Ausführungsbeispiel näher erläutert werden.

Dabei zeigt:

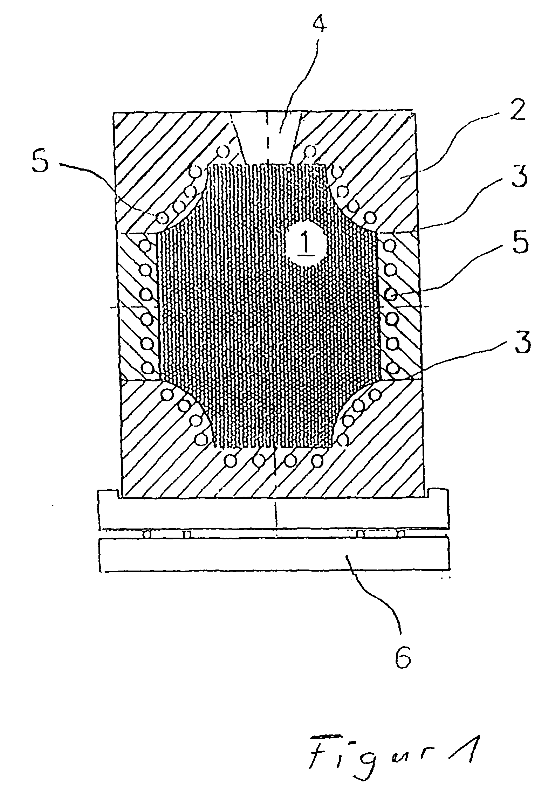

- Figur 1: einen Schnitt durch einen beheizbaren Formkörper, in dem ein aus Hohlkugeln gebildeter Schwingungsdämpfer, als Leichtbauelement hergestellt werden kann.

Ein als Leichtbauelement 1 Schwingungsdämpfer entsprechend Figur 1 wird im wesentlichen aus Hohlkugeln, deren Schalen aus einem gesinterten Metall, beispielsweise Eisen gebildet sind, hergestellt. Sie können, wie dies im Stand der Technik bekannt ist, vorab hergestellt worden sein. Bei diesem Beispiel sollten die verwendeten Hohlkugeln einen Außendurchmesser von ca. 1 mm aufweisen, wobei die Durchmesser sämtlicher Hohlkugeln möglichst gleich sein sollten.

Die Hohlkugeln können dann, beispielsweise mittels einer aus DE 197 50 042 C2 bekannten Vorrichtung mit einer pulverförmigen Kupferlegierung beschichtet werden. Dabei wird eine Funktionsschicht mit einer Dicke von ca. 0,3 mm ausgebildet.

Nach dem Aushärten bzw. Trocknen der Funktionsschicht, einer Lagerung und ggf. einem erforderlichen Transport, können die als lose Schüttung vorliegenden, miteinander nicht verklebten Hohlkugeln in einen geteilten Formkörper 2 eingefüllt werden. Der Formkörper 2 wird aus mehreren spaltfrei zusammengefügten Einzelteilen gebildet, die nach Herstellung des Schwingungsdämpfers, als ein Beispiel für ein Leichtbauelement 1 wieder, getrennt werden können.

Der Formkörper 2 weist weiter eine Einfüllöffnung 4 und elektrische Heizelemente 5 auf. Zur Verdichtung der eingefüllten Hohlkugeln ist der Formkörper 2, bei diesem Beispiel auf einer Vibrationseinrichtung 6 gelagert.

Nach der Befüllung des Formkörpers 2 mit den Hohlkugeln durch die Einfüllöffnung 4 wird die Vibrationseinrichtung 6 aktiviert, so dass die Hohlkugeln in dichter Packung vorliegen und alle Ausformungen des Formkörpers 2 ausfüllen.

Nachfolgend oder parallel hierzu werden die Heizelemente 5 mit einer elektrischen Spannungsquelle verbunden, dadurch der Formkörper 2 und demzufolge auch die innere Oberfläche des Formkörpers 2 erwärmt. Dadurch kommt es zum Erweichen und bei weiterer Temperaturerhöhung zum Schmelzen des Kupfers in der Funktionsschicht. Das geschmolzene Kupfer fließt, umgibt dabei die Oberfläche der Schalen der Hohlkugeln und verbindet diese untereinander mit dem geschmolzenen Kupfer benachbarter Hohlkugeln. Nach einem empirisch ermittelten Zeitablauf und/oder mittels einer Temperaturreglung werden die Heizelemente 5 von der Spannungsquelle getrennt und bei der relativ schnellen Abkühlung des Formkörpers wird die Schmelztemperatur des Kupfers entsprechend unterschritten, so dass dieses erstarrt.

Die Abkühlung kann beispielsweise mit in den Formkörper 2 eingeleiteter Kühlluft durch das poröse Leichtbauelement 1 beschleunigt werden.

Es ist nicht unbedingt erforderlich das gesamte Kupfer der Funktionsschicht aufzuschmelzen. Es kann ausreichen, äußere Oberflächenbereiche der Funktionsschichten anzuschmelzen.

Es kann aber auch ausreichen, das Kupfer von Hohlkugeln, die in äußeren Randbereichen des Leichtbauelementes 1 angeordnet sind, zu schmelzen und die im Inneren angeordneten Hohlkugeln nahezu unbeeinflußt zu lassen, so dass am Leichtbauelement 1 eine Art äußere relativ stabile Schale ausgebildet ist, die ausreicht, das Leichtbauelement zumindest soweit handhabbar zu machen, dass es aus dem Formkörper 2 entnommen werden kann.

Ein solches Leichtbauelement 1 kann dann mit einem weiteren Verfahrensschritt in einem Sinterofen einer weiteren Wärmebehandlung unterzogen werden, um ein vollständiges Aufschmelzen des gesamten Kupfers zu erreichen.

Für den Einsatz eines Leichtbauelementes 1 als Schwingungsdämpfer kann eine hierfür besonders geeignete Kupferlegierung mit ausreichender Stabilität und Festigkeit, der miteinander verbundenen Hohlkugeln ausgewählt werden.

## Patentansprüche

1. Verfahren zur Herstellung von Leichtbauteilen, bei dem anorganische gesinterte Hohlkugeln, die mit einer Funktionsschicht, die mit Polymeren, organischen Bindemitteln oder pulverförmigem Metall und Treibmittel gebildet ist, beschichtet sind, in einen Formkörper (2) oder ein die äußere Hülle des Leichtbauelementes (1) bildendes Gebilde gefüllt, nach dem Befüllen eine Behandlung mit Lösungs-, Quellmittel und/oder eine Wärmebehandlung, die zur plastischen Verformbarkeit des Funktionsschichtmaterials führt, durchgeführt wird, wobei durch die plastische Verformung die Hohlkugeln zumindest formschlüssig miteinander verbunden werden, dabei benachbarte Hohlkugeln an ihren Berührungspunkten mit ihren Schalen unmittelbar aneinander bringen und in berührenden Kontakt gebracht werden.

2. Verfahren nach Anspruch 1,
**dadurch gekennzeichnet, dass** eine Erwärmung bis mindestens zur Erweichung der Funktionsschichten durchgeführt wird.

3. Verfahren nach einem der Ansprüch 1 bis 2,
**dadurch gekennzeichnet, dass** mit der Behandlung das Volumen der plastisch verformten Funktionsschicht dauerhaft vergrößert wird.

4. Verfahren nach Anspruch 1 oder 3,
**dadurch gekennzeichnet, dass** das Funktionsschichtmaterial aufgeschäumt oder aufgequollen wird.

5. Verfahren nach einem der Ansprüche 1 bis 4,
**dadurch gekennzeichnet, dass** die eingefüllten Hohlkugeln vor und/oder während der Behandlung verdichtet werden.

6. Verfahren nach einem der Ansprüche 1 bis 5,
**dadurch gekennzeichnet, dass** ein flüssiges oder gasförmiges Lösungsmittel für das Funktionsschichtmaterial in den Formkörper (2) oder das Gebilde eingeführt wird.

7. Verfahren nach Anspruch 6,
**dadurch gekennzeichnet, dass** das Lösungsmittel nach der Behandlung abgezogen und/oder durch Erwärmung ausgetrieben wird.

8. Verfahren nach einem der Ansprüche 1 bis 7,
**dadurch gekennzeichnet, dass** vor dem Befüllen die Innenwand des Formkörpers (2) oder des Gebildes mit einem Trennmittel, einem Hüllmittel oder dem Funktionsschichtmaterial beschichtet wird.

9. Verfahren nach einem der Ansprüche 1 bis 8,
**dadurch gekennzeichnet, dass** die Behandlung in einem Formkörper (2) soweit durchgeführt wird, dass Hohlkugeln insoweit miteinander verbunden sind, dass ein handhabbares, entformbares Roh-Leichtbauele-ment (1) erhalten wird.

10. Verfahren nach Anspruch 9,
**dadurch gekennzeichnet, dass** das Leichtbauelement (1) verformt wird.

11. Verfahren nach Anspruch 1 oder 10,
**dadurch gekennzeichnet, dass** die Oberfläche des Leichtbauelementes (1) kaschiert, beschichtet oder abgedeckt wird.

12. Verfahren nach einem der Ansprüche 1 bis 11,
**dadurch gekennzeichnet, dass** die Hohlkugeln kontinuierlich oder quasikontinuierlich in eine Form eingebracht und Leichtbauelemente (1) nach der Behandlung kontinuierlich oder quasikontinuierlich entnommen werden.

13. Verfahren nach einem der Ansprüche 1 bis 12,
**dadurch gekennzeichnet, dass** für die Funktionsschicht ein Material oder ein Material, dass eine Materialkomponente enthält, dessen/deren Erweichungstemperatur kleiner, als die Erweichungstemperatur des Schalenmaterials oder der Temperatur bei der die Schale instabil wird, verwendet wird.

14. Verfahren nach einem der Ansprüche 1 bis 13
**dadurch gekennzeichnet, dass** für die Funktionsschicht ein Material oder ein Material, dass eine Materialkomponente enthält, dessen/deren Schmelztemperatur kleiner, als die Schmelztemperatur des Schalenmaterials oder der Temperatur bei der die Schale instabil wird, verwendet wird.

15. Verfahren nach einem der Ansprüche 1 bis 14,
**dadurch gekennzeichnet, dass** für die Funktionsschicht ein organisches, mit einem Lösungsmittel lösbares Polymer verwendet wird.

16. Verfahren nach einem der Ansprüche 1 bis 15,
**dadurch gekennzeichnet, dass** für die Funktionsschicht eine Polymer, ausgewählt aus Ethylenvinylacetat Copolymeren, Polyamiden, Polyester, Epoxidharz, Phenolharz oder Bindemitteln auf Kautschukbasis verwendet wird.

17. Verfahren nach einem der Ansprüche 1 bis 16,
**dadurch gekennzeichnet, dass** für die Funktionsschicht ein Bindemittel mit dem Partikel mit adhäsiv gehalten sind, verwendet wird.

18. Verfahren nach Anspruch 16,
**dadurch gekennzeichnet, dass** als Polymer ein Pulverlack auf Epoxidharzbasis verwendet wird.

19. Verfahren nach einem der Ansprüche 1 bis 18,
**dadurch gekennzeichnet, dass** die Funktionsschicht ein Material, dass ein Metall, ein Metalloxid, ein Glas oder eine Keramik enthält, verwendet wird.

20. Verfahren nach einem der Ansprüche 1 bis 19,
**dadurch gekennzeichnet, dass** in der Funktionsschicht ein Flussmittel, Sinterhilfsmittel oder ein Treibmittel enthalten ist.

21. Verfahren nach einem der Ansprüche 1 bis 20,
**dadurch gekennzeichnet, dass** als Treibmittel ein pulverförmiges Metallhydrid, Carbonat oder Hydrat, verwendet wird.

22. Verfahren nach einem der Ansprüche 1 bis 21,
**dadurch gekennzeichnet, dass** in die Funktionsschicht ferro- und/oder permanentmagnetische Partikel eingebettet werden.

23. Verfahren nach einem der Ansprüche 1 bis 22,
**dadurch gekennzeichnet, dass** die Funktionsschicht mit einem katalytisch wirkenden Element oder einer Verbindung gebildet oder mit einer solchen Verbindung oder Element dotiert wird.

24. Verfahren nach einem der Ansprüche 1 bis 23,
**dadurch gekennzeichnet, dass** die Schale oder die Funktionsschicht mit einem das jeweils andere Material infiltrierbaren Metall oder eine Metalllegierung gebildet wird.

25. Verfahren nach einem der Ansprüche 1 bis 24,
**dadurch gekennzeichnet, dass** auf der Funktionsschicht eine Siegelschicht ausgebildet wird.

26. Verfahren nach Anspruch 25,
**dadurch gekennzeichnet, dass** die Siegelschicht aus Cellulose, Pektin oder Polyvinylalkohol gebildet wird.

## Claims

1. Method for producing lightweight structural components, in which inorganic mixed hollow balls, which are coated with a functional layer formed using polymers, organic binders or pulverulent metal and blowing agent, are introduced into a mould body (2) or a structure which forms the outer cladding of the lightweight structural component (1), after the filling operation a treatment with solvent, swelling agent and/or a heat treatment, which leads to the plastic deformability of the functional-layer material, is carried out, with the plastic deformation causing the hollow balls to be joined to one another at least in a positively-locking manner, with adjacent hollow balls, at their points of contact, bearing directly against one another by means of their shells and thereby being brought into touching contact.

2. Method according to Claim 1, **characterized in that** a heating step is carried out at least until the functional layers soften.

3. Method according to one of Claims 1 to 2, **characterized in that** the volume of the plastically deformed functional layer is permanently increased by the treatment.

4. Method according to Claim 1 or 3, **characterized in that** the functional-layer material is foamed or swollen.

5. Method according to one of Claims 1 to 4, **characterized in that** the hollow balls which have been introduced are compressed before and/or during the treatment.

6. Method according to one of Claims 1 to 5, **characterized in that** a liquid or gaseous solvent for the functional-layer material is introduced into the mould body (2) or the structure.

7. Method according to Claim 6, **characterized in that** after the treatment the solvent is extracted and/or expelled by heating.

8. Method according to one of Claims 1 to 7, **characterized in that** prior to the filling operation the inner wall of the mould body (2) or of the structure is coated with a parting agent, a cladding agent or the functional-layer material.

9. Method according to one of Claims 1 to 8, **characterized in that** the treatment is carried out in a mould body (2) until hollow balls have been joined to one another to a sufficient extent for a semi-finished lightweight structural component (1) which can be handled and demolded to be obtained.

10. Method according to Claim 9, **characterized in that** the lightweight structural component (1) is deformed.

11. Method according to Claim 1 or 10, **characterized in that** the surface of the lightweight structural component (1) is laminated, coated or covered.

12. Method according to one of Claims 1 to 11, **characterized in that** the hollow balls are introduced continuously or quasi-continuously into a mould and lightweight structural components (1) are removed continuously or quasi-continuously after the treatment.

13. Method according to one of Claims 1 to 12, **characterized in that** a material or a material which contains a material component whose softening point is less than the softening point of the shell material or the temperature at which the shell becomes unstable is used for the functional layer.

14. Method according to one of Claims 1 to 13, **characterized in that** a material or a material which contains a material component whose melting point is lower than the melting point of the shell material or the temperature at which the shell becomes unstable is used for the functional layer.

15. Method according to one of Claims 1 to 14, **characterized in that** an organic polymer which can be dissolved using a solvent is used for the functional layer.

16. Method according to one of Claims 1 to 15, **characterized in that** a polymer selected from ethylene vinyl acetate copolymers, polyamides, polyesters, epoxy resin, phenolic resin or rubber-based binders is used for the functional layer.

17. Method according to one of Claims 1 to 16, **characterized in that** a binder which is used to adhesively hold particles is used for the functional layer.

18. Method according to Claim 16, **characterized in that** the polymer used is a powder coating based on epoxy resin.

19. Method according to one of Claims 1 to 18, **characterized in that** a material which contains a metal, a metal oxide, a glass or a ceramic is used for the functional layer.

20. Method according to one of Claims 1 to 19, **characterized in that** a flux, sintering aid or a blowing agent is included in the functional layer.

21. Method according to one of Claims 1 to 20, **characterized in that** the blowing agent used is a pulverulent metal hydride, carbonate or hydrate.

22. Method according to one of Claims 1 to 21, **characterized in that** ferromagnetic and/or permanent-magnetic particles are embedded in the functional layer.

23. Method according to one of Claims 1 to 22, **characterized in that** the functional layer is formed using a catalytically active element or compound or is doped with such a compound or element.

24. Method according to one of Claims 1 to 23, **characterized in that** the shell or the functional layer is formed using a metal or metal alloy which can infiltrate the other material in each case.

25. Method according to one of Claims 1 to 24, **characterized in that** a sealing layer is formed on the functional layer.

26. Method according to Claim 25, **characterized in that** the sealing layer is formed from cellulose, pectin or polyvinyl alcohol.

## Revendications

1. Procédé de fabrication d'éléments de construction légers, dans lequel on remplit avec des sphères creuses inorganiques frittées revêtues d'une couche fonctionnelle formée à partir de polymères, de liants organiques ou de métal en poudre et d'agent porogène un article moulé (2) ou une structure formant l'enveloppe externe de l'élément de construction léger (1),
après le remplissage, on effectue un traitement avec un solvant, un agent gonflant et/ou un traitement thermique qui se traduit par une aptitude à la déformation plastique du matériau de la couche fonctionnelle,
la déformation plastique ayant pour effet de relier les sphères creuses entre elles au moins selon une liaison positive dans laquelle des sphères creuses voisines sont directement les unes contre les autres par leurs enveloppes au niveau de leurs points de contact et sont amenées en contact contigu.

2. Procédé selon la revendication 1, **caractérisé en ce que** l'on élève la température au moins jusqu'au ramollissement des couches fonctionnelles.

3. Procédé selon l'une des revendications 1 à 2, **caractérisé en ce que** le traitement augmente de manière durable le volume de la couche fonctionnelle déformée plastiquement.

4. Procédé selon la revendication 1 ou la revendication 3, **caractérisé en ce que** le matériau de la couche fonctionnelle est moussé ou expansé.

5. Procédé selon l'une des revendications 1 à 4, **caractérisé en ce que** les sphères creuses introduites sont compactées avant et/ou pendant le traitement.

6. Procédé selon l'une des revendications 1 à 5, **caractérisé en ce que** l'on introduit un solvant liquide ou gazeux pour le matériau de la couche fonctionnelle dans l'article moulé (2) ou dans la structure.

7. Procédé selon la revendication 6, **caractérisé en ce que** le solvant est enlevé après le traitement et/ou chassé par une élévation de température.

8. Procédé selon l'une des revendications 1 à 7, **caractérisé en ce que**, avant le remplissage, la paroi interne de l'article moulé (2) ou de la structure est revêtue avec un agent de séparation, avec un agent de gainage ou avec le matériau de la couche fonctionnelle.

9. Procédé selon l'une des revendications 1 à 8, **caractérisé en ce que** le traitement se fait dans un article moulé (2) jusqu'à ce que des sphères creuses soient reliées les unes aux autres de manière à obtenir un élément de construction léger (1) brut démoulable et manipulable.

10. Procédé selon la revendication 9, **caractérisé en ce que** l'élément de construction léger (1) est déformé.

11. Procédé selon la revendication 1 ou 10, **caractérisé en ce que** la surface de l'élément de construction léger (1) est plaquée, revêtue ou recouverte.

12. Procédé selon l'une des revendications 1 à 11, **caractérisé en ce que** les sphères creuses sont introduites de manière continue ou quasi continue dans un moule et **en ce que**, après le traitement, les éléments de construction légers (1) sont démoulés de manière continue ou quasi continue.

13. Procédé selon l'une des revendications 1 à 12, **caractérisé en ce que** l'on utilise pour la couche fonctionnelle un matériau ou un matériau contenant un composant de matériau dont la température de ramollissement est inférieure à la température de ramollissement du matériau de l'enveloppe ou à la température à laquelle l'enveloppe devient instable.

14. Procédé selon l'une des revendications 1 à 13, **caractérisé en ce que** l'on utilise pour la couche fonctionnelle un matériau ou un matériau contenant un composant de matériau dont la température de fusion est inférieure à la température de fusion du matériau de l'enveloppe ou à la température à laquelle l'enveloppe devient instable.

15. Procédé selon l'une des revendications 1 à 14, **caractérisé en ce que** l'on utilise pour la couche fonctionnelle un polymère organique soluble dans un solvant.

16. Procédé selon l'une des revendications 1 à 15, **caractérisé en ce que** l'on utilise pour la couche fonctionnelle choisi parmi des copolymères d'éthylène et d'acétate de vinyle, des polyamides, des polyesters, une résine époxyde, une résine phénolique ou des liants à base de caoutchouc.

17. Procédé selon l'une des revendications 1 à 16, **caractérisé en ce que** l'on utilise pour la couche fonctionnelle un liant avec lequel des particules sont maintenues de manière adhésive.

18. Procédé selon la revendication 16, **caractérisé en ce que** l'on utilise comme polymère une laque en poudre à base de résine époxyde.

19. Procédé selon l'une des revendications 1 à 18, **caractérisé en ce que** l'on utilise pour la couche fonctionnelle un matériau qui contient un métal, un oxyde métallique, un verre ou une céramique.

20. Procédé selon l'une des revendications 1 à 19, **caractérisé en ce que** la couche fonctionnelle contient un agent de fluxage, un auxiliaire de frittage ou un agent porogène.

21. Procédé selon l'une des revendications 1 à 20, **caractérisé en ce que** l'on utilise comme agent porogène un hydrure métallique, un carbonate ou un hydrate en poudre.

22. Procédé selon l'une des revendications 1 à 21, **caractérisé en ce que** des particules ferromagnétiques ou à aimantation permanente sont incorporées dans la couche fonctionnelle.

23. Procédé selon l'une des revendications 1 à 22, **caractérisé en ce que** la couche fonctionnelle est formée avec un élément ou un composé ayant une action catalytique ou bien dopée avec un tel composé ou un tel élément.

24. Procédé selon l'une des revendications 1 à 23, **caractérisé en ce que** l'enveloppe ou la couche fonctionnelle est formée avec un métal ou un alliage métallique qui peut être infiltré dans l'autre matériau respectif.

25. Procédé selon l'une des revendications 1 à 24, **caractérisé en ce qu'**une couche de scellement est formée sur la couche fonctionnelle.

26. Procédé selon la revendication 25, **caractérisé en ce que** la couche de scellement est formée à partir de cellulose, de pectine ou d'alcool polyvinylique.
